# FASCICULE DE BREVET EUROPEEN

(11) **EP 3 959 137 B1**
(45) Date de publication et mention de la délivrance du brevet: **15.11.2023**
(21) Numéro de dépôt: 20749929.4
(22) Date de dépôt: 23.04.2020
(51) Int. Cl.: B64D 33/02, F02C 7/04, F02C 7/047

(54) **ENTRÉE D'AIR DE NACELLE ET NACELLE COMPORTANT UNE TELLE ENTRÉE D'AIR**
LUFTEINLASS EINER GONDEL UND GONDEL MIT EINEM SOLCHEN LUFTEINLASS
NACELLE AIR INTAKE AND NACELLE COMPRISING SUCH AN AIR INTAKE

(30) Priorité: 26.04.2019 FR 1904430
(43) Date de publication de la demande: 02.03.2022
(73) Titulaire: Safran Nacelles, 76700 Gonfreville l'Orcher (FR)
(72) Inventeur: FERRIER, Gina, 77550 Moissy Cramayel (FR); BOILEAU, Patrick, 77550 Moissy Cramayel (FR); CARUEL, Pierre, 77550 Moissy Cramayel (FR)
(74) Mandataire: Germain Maureau
(86) Numéro de dépôt international: PCT/FR2020/050696
(87) Numéro de publication internationale: WO 2020/217027

(56) Documents cités:
- FR-A1- 2 856 379
- FR-A1- 2 966 126
- FR-A1- 2 998 548
- FR-A1- 3 016 159
- FR-A1- 3 055 922

## Description

La présente invention concerne un ensemble propulsif d'aéronef comprenant une nacelle et un moteur tel qu'un turboréacteur, et concerne en particulier une entrée d'air d'une telle nacelle.

Un aéronef est mû par un ou plusieurs turboréacteurs logés chacun dans au moins une nacelle. La nacelle présente généralement une structure tubulaire comprenant une section d'entrée d'air en amont du turboréacteur, une section médiane destinée à entourer une soufflante du turboréacteur, et une section aval abritant les moyens d'inversion de poussée.

La section aval de la nacelle entoure le générateur de gaz du turboréacteur qui est terminé par une tuyère d'éjection située en aval du turboréacteur.

La section d'entrée d'air de la nacelle comporte notamment une lèvre avant de forme générale annulaire qui intercepte le flux d'air d'entrée de la nacelle qui est dirigé vers une soufflante.

Pour ce faire, le reste de la structure d'entrée d'air présente une structure sensiblement annulaire comprenant un panneau ou paroi externe assurant la continuité aérodynamique externe de la nacelle et un panneau ou paroi interne assurant la continuité aérodynamique interne de la nacelle, notamment avec le carter de soufflante au niveau de la section médiane. La lèvre d'entrée d'air assure la jonction entre ces deux parois en formant un bord d'attaque de la nacelle et peut notamment être intégrée au panneau externe formant ainsi une paroi principale de l'entrée d'air.

De manière générale, la lèvre avant est constituée par une pièce unique de forme annulaire qui est directement fixée sur des cloisons de support intérieures à la nacelle. On note aussi l'utilisation d'une cloison amont qui forme un volume annulaire derrière la lèvre avant en forme de « D ».

Plus précisément, la section d'entrée de nacelle comporte généralement :
- une paroi interne, de préférence munie d'une pièce acoustique interne sensiblement cylindrique ayant un bord amont et un bord aval, cette pièce formant une partie au moins d'une virole acoustique de l'entrée d'air étant appelée « inner barrel » en jargon anglo-saxon ;
- une paroi externe sensiblement cylindrique ;
- une lèvre avant reliant les parois interne et externe en formant un bord d'attaque ;
- une bride de montage aval configurée pour le montage de la section d'entrée à une bride avant d'une paroi du turboréacteur; et
- une cloison arrière présentant une extrémité aval pour solidariser la partie
externe de la paroi externe à la bride de montage aval.

Une entrée d'air pour une nacelle de moteur d'aéronef est connue du document FR 3 055 922 A1. La paroi externe est reliée au carter de soufflante par une bride arrière, et à une collerette annulaire d'un conduit annulaire ("D-duct") par une bride avant.

Par ailleurs, l'entrée d'air comprend généralement un système de dégivrage. Un type de système de dégivrage ou d'antigivrage connu, présenté notamment par les documents EP 0 913 326 B1 ou US 2002/0179773 A1, comporte un tube circulaire faisant le tour de la nacelle, qui alimente en air chaud prélevé sur le turboréacteur, le volume intérieur de la lèvre avant de cette nacelle afin de réchauffer ses parois.

L'allongement de la lèvre avant de la nacelle est notamment recherché pour des raisons aérodynamiques, afin d'étendre vers l'aval la zone d'écoulement d'air laminaire. Mais son allongement n'est pas sans répercussion sur la conception du reste de la nacelle. En particulier, la nacelle doit présenter des performances de rigidité mécanique de manière à réduire ses déformations lors des sollicitations en fonctionnement.

Il en résulte que la pièce qui forme la lèvre avant qui limite l'entrée d'air frais de la nacelle présente en coupe une forme complexe et de grandes dimensions.

Pour résoudre ces problématiques, il a été développé le concept d'une lèvre dite « étendue » comprenant une paroi externe s'étendant très en aval par rapport à la paroi interne et venant recouvrir extérieurement une partie du carter de soufflante, la paroi externe ainsi que la lèvre formant une pièce intégrale, c'est-à-dire d'un seul tenant.

Une telle disposition décrite dans l'état de la technique permet une économie de masse de matériau et de complexité de pièces par rapport à l'état de la technique plus ancien dans lequel l'enveloppe externe et la lèvre avant de la section d'entrée de la nacelle sont constituées par des pièces séparées.

Cependant, pour avantageuses que soient ces dispositions, elles exigent l'adjonction de renforts annulaires, disposés à l'intérieur de l'enveloppe externe. La pièce unique ainsi formée, par ailleurs est d'une grande dimension et d'un volume important. Sa réalisation exige un outil complexe et coûteux.

La présente invention apporte un remède à tout ou partie de ces inconvénients et propose notamment une solution présentant les avantages en terme d'aérodynamisme d'une lèvre dite étendue tout en présentant une rigidité améliorée.

A cet effet, la présente invention concerne une entrée d'air pour une nacelle de moteur d'aéronef selon la revendication 1.

En référence à la structure de support, on comprendra par l'expression « solidaire » ou « solidarisation » que la structure de support est configurée pour être solidaire de la paroi du turboréacteur formant le carter de soufflante de sorte qu'un chemin de reprise des efforts, en position assemblée, passe de la paroi externe vers le carter de soufflante, sans passer par la paroi interne.

Préférentiellement, la structure de support est directement fixée à la bride arrière de la paroi du turboréacteur formant le carter de soufflante.

Une telle solution présente les avantages aérodynamiques d'une lèvre dite étendue dont les efforts sont directement transmis de l'entrée d'air sur le carter de soufflante ou carter moteur, le chemin des efforts passant par la structure de support. Ceci améliore la rigidité de l'entrée d'air, et de la nacelle en général dans la position assemblée de l'entrée d'air sur la section médiane de la nacelle.

Le vocable « en aval de la bride de montage, en position assemblée » s'entend également comme en aval de l'extrémité amont de la bride, soit en aval d'un plan de jonction entre les deux brides en position assemblée.

Selon une caractéristique technique particulière, la lèvre d'entrée d'air peut être intégrée à la paroi interne et/ou externe.

De préférence encore, la lèvre d'entrée d'air peut être intégrée à la paroi interne et/ou externe de sorte à former ensemble une paroi d'un seul tenant.

En d'autres termes, la lèvre d'entrée d'air, la paroi interne et la paroi externe sont formées d'une seule pièce.

De préférence, la structure de support est configurée pour être solidaire de la paroi du turboréacteur formant le carter de soufflante de sorte qu'un chemin de reprise des efforts, en position assemblée, passe directement de la paroi externe vers le carter de soufflante, sans passer par la paroi interne. En d'autres termes, la paroi interne est évitée.

Avantageusement, l'extrémité aval de la paroi externe est configurée pour être située longitudinalement dans un intervalle s'étendant entre :
- un point extrême amont, à une distance maximale de 70% de la longueur de l'entrée d'air en amont par rapport à la bride de montage ; et
- un point extrême aval, situé à une distance maximale de 100% de la longueur de la paroi du turboréacteur formant le carter de soufflante, en aval par rapport à la bride de montage.

De préférence, l'entrée d'air est configurée de sorte que, en position assemblée, le point extrême aval est situé à une distance inférieure à 50% de la longueur de la paroi du turboréacteur formant le carter de soufflante, en aval par rapport à la bride de montage, et de préférence encore à une distance inférieure de 10 à 20% de la longueur de la paroi du turboréacteur formant le carter de soufflante, en aval par rapport à la bride de montage.

Selon une caractéristique avantageuse, l'extrémité aval de la paroi externe est située longitudinalement au niveau, c'est-à-dire au droit de, ou en amont de la bride de montage avant.

Le vocable « en amont de la bride de montage avant» s'entend également comme en amont de l'extrémité aval de la bride, soit en amont du plan de jonction entre les deux brides en position assemblée.

Une telle solution implique de décaler en amont la liaison entre le bord aval de la lèvre et le bord amont de l'enveloppe extérieure, ceci contre l'idée préconçue de l'homme du métier qui l'ont poussées à développer une lèvre étendue pour des raisons aérodynamiques.

Par ailleurs, une telle caractéristique combinée avec une fixation de la structure de support en aval de la bride de montage sur l'enveloppe intérieure permet un meilleur transfert d'efforts.

Dans le cas où l'extrémité aval de la paroi externe est située longitudinalement en amont de la bride de montage avant, cette extrémité aval est de préférence située à une distance inférieure à 50% de la longueur de l'entrée d'air en amont par rapport à la bride de montage, et de préférence encore à une distance comprise entre 10% à 20%, de la longueur de l'entrée d'air en amont par rapport à la bride de montage. Une telle valeur représente un bon compromis entre aérodynamisme, transfert d'efforts et facilité de la maintenance.

En alternative, dans le cas où l'extrémité aval de la paroi externe est située longitudinalement en aval de la bride de montage avant, cette extrémité aval est de préférence configurée de sorte à être située, en position assemblée, à une distance inférieure à 50% de la longueur de la paroi du turboréacteur formant le carter de soufflante, en aval par rapport à la bride de montage, et de préférence encore à une distance inférieure de 10 à 20% de la longueur de la paroi du turboréacteur formant le carter de soufflante, en aval par rapport à la bride de montage.

Selon une caractéristique technique particulière, la partie de la paroi externe configurée pour venir au moins en appui contre une surface de support de la structure de support comprend l'extrémité aval de la paroi externe.

Avantageusement, en plus d'être en appui contre une surface de support de la structure de support, la paroi externe est fixée à elle par des moyens de fixation.

De préférence, l'extrémité aval de la paroi externe est configurée pour supporter une extrémité avant du capot extérieur de soufflante dans la zone de jonction, en position assemblée.

Dans une telle configuration, la jonction de l'extrémité aval de la paroi externe avec la structure de support est située sous la zone d'appui du capot extérieur de soufflante sur la paroi externe de l'entrée d'air.

Dans ce cas, l'extrémité aval de la paroi externe présente un décrochement dimensionné en fonction de l'épaisseur radiale dudit capot extérieur de soufflante de sorte que les deux parois formant succésivement la ligne aérodynamique extérieure de la nacelle soient continues et affleurantes.

Du fait que la jonction soit située sous la zone d'appui du capot extérieur de soufflante, cela permet de ne pas impacter la qualité des lignes et l'aspect cosmétique (peinture) par des fixations apparentes. De ce fait, les éventuels moyens de fixation peuvent être de tailles plus importantes et moins nombreux.

De préférence, ce support de l'extrémité avant du capot extérieur de soufflante est complété par des moyens de fixation pour fixer l'extrémité avant du capot extérieur. Alternativement ou en complément, les moyens de fixations peuvent assurer la fixation directe du caport extérieur avec la structure support.

Selon une caractéristique technique, la structure de support comporte des fenêtres d'accès configurées être traversées par des outils de maintenance lors des opérations de maintenance de l'entrée d'air

Selon une caractéristique technique particulière, la structure de support est disposée de manière sensiblement continue autour de la paroi du turboréacteur du carter de soufflante, et comporte par exemple une cloison.

Alternativement ou en complément, la structure de support est configurée de manière discontinue autour de la paroi du turboréacteur du carter de soufflante, et comporte par exemple un ensemble de tiges de support pouvant former un treilli. Dans ce cas, un espace entre deux tiges peut délimiter une fenêtre d'accès pour la maintenance.

Avantageusement, l'extrémité inférieure de la structure de support est configurée pour être solidaire d'une face arrière de la bride arrière. Cela participe à l'amélioration du chemin d'effort et au renfort de la structure.

Préférentiellement, l'extrémité inférieure de la structure de support est directement fixée à la face arrière de la bride arrière.

Selon un autre aspect, l'invention concerne également une nacelle comportant une entrée d'air comportant tout ou partie des caractéristiques précitées.

D'autres caractéristiques et avantages de l'invention ressortiront à la lecture de la description qui suit, donnée uniquement à titre d'exemple, en référence aux figures annexées.

La figure 1 une coupe schématique partielle d'un mode de réalisation d'une nacelle.

La figure 2 une vue en coupe schématique d'une entrée d'air selon un mode de réalisation.

La figure 3 et la figure 4 sont des vues en coupe d'une entrée d'air selon un mode de réalisation.

La figure 5A et la figure 5B sont des vues en coupe d'une entrée d'air selon deux modes de réalisation avec une extrémité aval de la paroi externe située longitudinalement en amont (figure 5A) et en aval (figure 5B) de la bride de montage avant.

La figure 6A, la figure 6B et la figure 6C sont des vues d'une entrée d'air selon un mode de réalisation et notamment d'une structure de support munie de fenêtres d'accès configurées être traversées par des outils de maintenance lors des opérations de maintenance de l'entrée d'air.

La figure 7A, la figure 7B et la figure 7C sont des vues en coupe d'une entrée d'air selon trois modes de réalisation présentant notamment différents modes de réalisation du support de la paroi externe de l'entrée d'air et du capot extérieur de soufflante.

Sur l'ensemble de ces figures, des références identiques ou analogues désignent des organes ou ensembles d'organes identiques ou analogues.

L'expression « amont » et « avant » seront utilisées indifféremment l'une de l'autre pour désigner l'amont de l'entrée d'air et l'expression « aval » et « arrière » seront utilisées indifféremment l'une de l'autre pour désigner l'aval de l'entrée d'air.

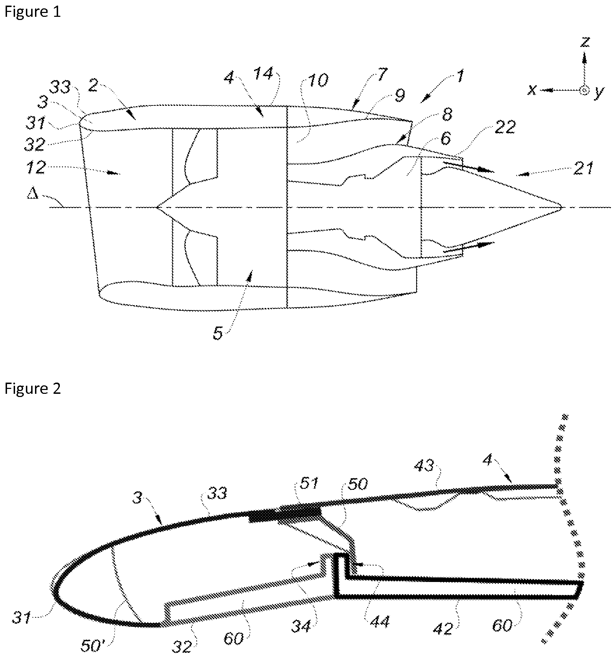

Comme représenté sur la figure 1, une nacelle 1 selon l'invention présente une forme sensiblement tubulaire selon un axe longitudinal Δ (direction parallèle à X).

La nacelle 1 comprend une section amont 2 avec une lèvre d'entrée d'air 3, une section médiane 4 entourant une soufflante 5 d'un moteur 6 tel qu'un turboréacteur double flux et une section aval 7 abritant un système d'inversion de poussée (non visible), la nacelle servant à canaliser les flux d'air généré par le moteur 6.

L'entrée d'air 3 se divise en deux parties, à savoir d'une part, une lèvre 31 d'entrée adaptée pour permettre la captation optimale vers le turboréacteur de l'air nécessaire à l'alimentation de la soufflante et des compresseurs internes du turboréacteur, et d'autre part, une structure aval 32, 33 sur laquelle peut être rapportée la lèvre et destinée à canaliser convenablement l'air vers les aubes de la soufflante. L'ensemble est rattaché en amont d'un carter de la soufflante appartenant à la section médiane 4 de la nacelle 1.

La section aval 7 comprend quant à elle une structure interne 8 (encore appelée « inner fixed structure » ou « IFS ») entourant la partie amont du turboréacteur 6, une structure externe (encore appelée « outer fan structure » ou « OFS ») 9 formant le canal flux froid et fixes par rapport au moteur, et un capot mobile comportant des moyens d'inversion de poussée.

L'IFS 8 et l'OFS 9 délimite une veine 10 permettant le passage d'un flux d'air 12 pénétrant la nacelle 1 au niveau de la lèvre d'entrée d'air 3.

La nacelle 1 comporte un sommet 14 destiné à recevoir un mât réacteur d'attache permettant de fixer ladite nacelle 1 à une aile de l'aéronef. Pour ce faire, ledit sommet 14 comporte des moyens pour fixer ledit mât réacteur.

La nacelle de turboréacteur est en particulier suspendue au mât réacteur, par le biais d'une poutre au niveau de ce sommet 14.

La nacelle 1 se termine par une tuyère d'éjection 21.

Comme représenté plus spécifiquement sur la figure 2, l'entrée d'air 3 comporte une lèvre avant 31 formant un bord d'attaque de la nacelle, ladite lèvre 31 reliant une paroi interne 32 sensiblement cylindrique et une paroi externe 33 sensiblement cylindrique.

En d'autres termes, l'entrée d'air 3 présente une structure sensiblement annulaire comprenant la paroi externe 33 assurant la continuité aérodynamique externe de la nacelle et la paroi interne 32 assurant la continuité aérodynamique interne de la nacelle, notamment avec le carter de soufflante au niveau de la section médiane 4.

La lèvre 31 d'entrée d'air assure la jonction entre ces deux parois 32, 33 et peut notamment être intégrée à la paroi interne et/ou externe formant ainsi une paroi principale de l'entrée d'air 3.

L'enveloppe intérieure de la nacelle 1 comporte une partie amont (du côté de la section d'entrée d'air 3 de la nacelle 1) présentant notamment une virole acoustique et une partie aval (du côté de l'inverseur de poussée) comprenant le carter 42 de soufflante 5. Les deux parties amont et aval sont reliées par des brides d'attache reliées au turboréacteur.

Plus précisément, l'entrée d'air 3 comprend au niveau de sa paroi interne une bride 34 de montage avant configurée pour coopérer avec une bride 44 arrière solidaire d'une paroi du turboréacteur, en particulier du carter 42 de la soufflante 5.

Cette assemblage des brides 34 et 44 assure la fixation de l'entrée d'air 3 avec la section médiane 4.

La paroi externe 33 présente une extrémité aval 33' configurée pour être positionnée dans une zone de jonction affleurant avec une extrémité avant 43' d'un capot extérieur43 de soufflante de sorte à assurer la continuité aérodynamique externe de la nacelle.

Pour maintenir une certaine rigidité à la structure, cette paroi externe 33 vient en appui contre une surface de support 51 d'une structure de support 50. De préférence, cet appui est complété par des moyens de fixation pour fixer la cloison externe à ladite paroi externe de l'entrée d'air 3.

Cette structure de support 50 s'étend sensiblement radialement dans l'épaisseur de la nacelle 1 et est configurée pour être solidaire du carter 42 de soufflante de sorte que cette solidarisation est située longitudinalement en aval de la bride 34.

Ainsi, cette structure de support 50 est configurée pour être solidaire du carter 42 de la soufflante 50 de sorte que cette solidarisation est située longitudinalement en aval de la bride 34.

En d'autres termes cette structure de support s'étend d'une extrémité inférieure où elle est solidaire de la section médiane 4 à une extrémité supérieure formant surface de support de la paroi externe de l'entrée d'air.

L'extrémité aval 33' de la paroi externe 33 est en outre située longitudinalement en amont de la bride 34 de montage avant. Du fait de cette configuration, la structure de support présente une orientation s'écartant vers l'avant de l'axe longitunial de la nacelle.

En vue de diminuer la pollution sonore générée par le turboréacteur, au moins la paroi interne 32 de l'entrée d'air 3 est équipée d'une structure d'atténuation acoustique 60, laquelle est située dans l'espace délimité par la paroi principale à savoir la paroi interne 32, la paroi externe 33 et la lèvre avant 31.

Cette structure d'atténuation acoustique 60 se présente sous la forme d'un panneau à âme alvéolaire formant une structure alvéolaire dont les alvéoles délimitent des cellules acoustiques, la structure acoustique comprenant en outre une peau interne pleine assurant notamment la tenue mécanique du panneau.

Cette structure acoustique 60 est de préférence formée en matériaux composites. Dans le cas où les températures mises en jeu le permettent, d'autres matériaux peuvent être utilisés. Ces matériaux peuvent aussi être fonction du procédé de fabrication utilisé, par exemple par moulage en thermoplastique, par fabrication additive en aluminium, etc.

La section médiane comporte aussi une telle structure acoustique équipant notamment au moins en partie le carter 42 de soufflante 5.

Les brides de montage 34 et arrière 44 sont solidaires de ces structures acoustiques 60 respectives.

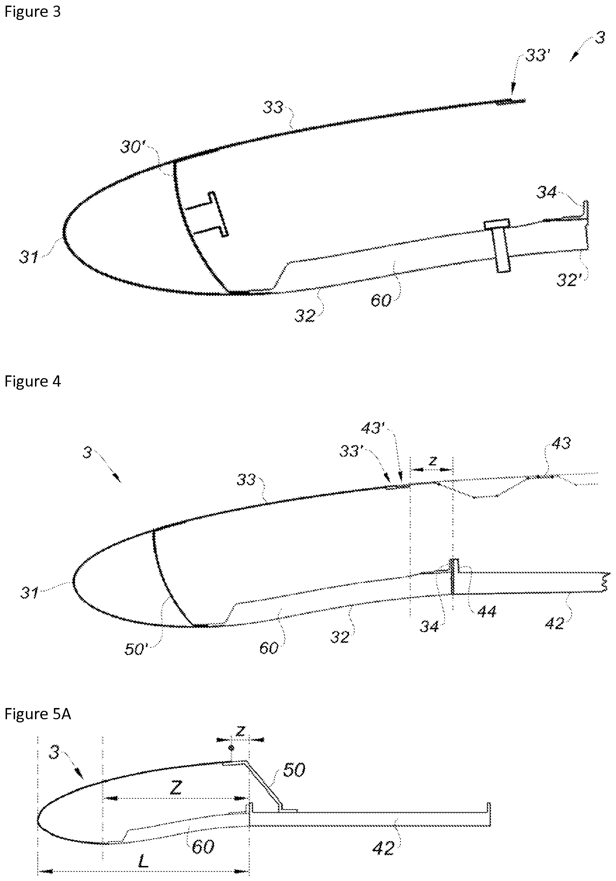

Les figures 3 et 4 représentent également des entrées d'air 3 selon des modes de réalisation illustrés ici sans la structure de support 50 pour illustrer le décalage de l'extrémité aval 33' de la paroi externe 33 longitudinalement en amont de la bride 34 de montage avant.

Sur la figure 3 sont illustrés en outre des équipements de l'entrée d'air tel qu'une alimentation d'un système de dégivrage de l'entrée d'air solidaire de la structure de support avant 50' et une sonde moteur traversant la structure d'atténuation acoustique 60 équipant la paroi interne 32.

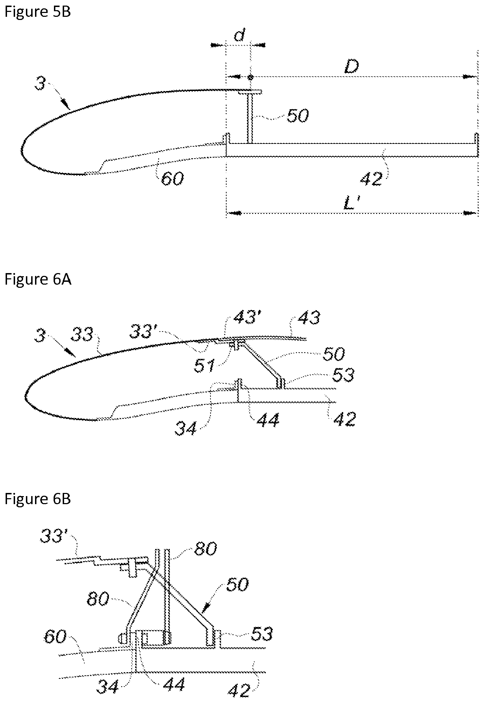

Les figures 5A et 5B illustrent des vues en coupe en d'une entrée d'air selon deux modes de réalisation avec une extrémité aval de la paroi externe située longitudinalement en amont (figure 5A) et en aval (figure 5B) de la bride de montage avant.

Dans le cas où l'extrémité aval 33' de la paroi externe 33 est configurée pour être située longitudinalement en amont par rapport à la la bride de montage avant 34, cette extrémité aval 33' est positionnée à une distance z de la bride de montage avant 34 inférieure à la distance maximale Z égale à 70% de la longueur L de l'entrée d'air 3 (prise entre ladite bride et l'extrémité amont de l'entrée d'air).

De préférence, cette distance z est inférieure à 50% de la longueur L et de préférence encore comprise entre 10 et 20% de la longueur L.

Dans le cas où l'extrémité aval 33' de la paroi externe 33 est configurée pour être située longitudinalement en aval par rapport à la la bride de montage avant 34, cette extrémité aval 33' est positionnée à une distance d de la bride de montage avant 34 qui est inférieure à la distance maximale D égale à 100 % de la longueur L' de la paroi du turboréacteur formant le carter 42 de soufflante (prise entre ladite bride et l'extrémité aval du carter de soufflante).

De préférence, cette distance d est inférieure à 50% de la longueur L' et de préférence encore comprise entre 10 et 20% de la longueur L'.

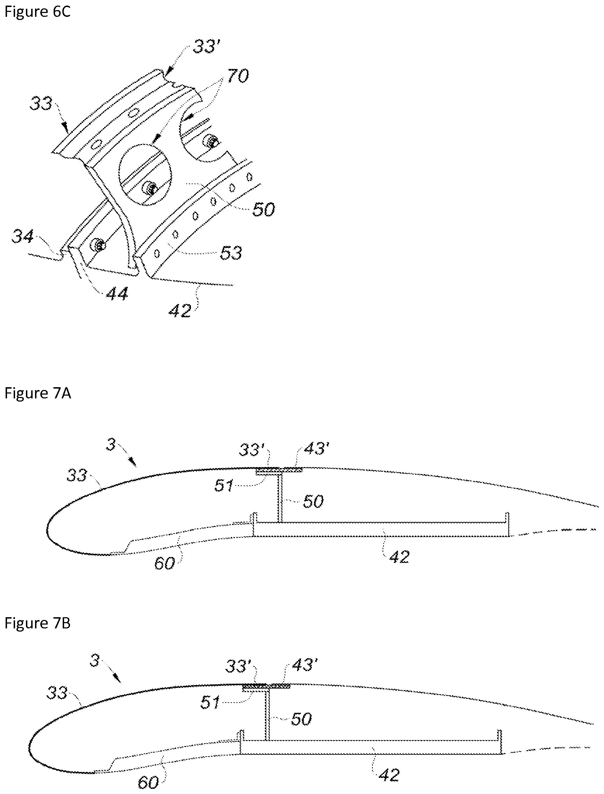

Les figures 6A, 6B et 6C illustrent des vues en coupe d'une entrée d'air selon un mode de réalisation et notamment d'une structure de support munie fenêtres d'accès configurées être traversées par des outils de maintenance lors des opérations de maintenance de l'entrée d'air.

La structure de support 50 comporte des fenêtres d'accès 70 configurées être traversées par des outils 80 de maintenance lors des opérations de maintenance de l'entrée d'air 3.

Ces fenêtres d'accès 70 sont configurées pour être suffisamment petites pour garantir l'intégrité sutrcturelle de la nacelle 1 et suffisament grande pour être traversées par des outils 80 de maintenance lors des opérations de maintenance de l'entrée d'air 3. Il est alors plus aisé d'accéder à la fois à la bride 34 de montage avant et à la bride 44 arrière, ceci facilitant les opérations de maintenance. La figure 6B illustrent des configurations avec l'accès avec des outils 80 aux moyens de fixation des brides de montage 34 et 44 entre elles.

Dans ce mode de réalisation, la structure de support 50 présente la forme d'une cloison, c'est-à-dire qu'elle est sensiblement continue autour de la paroi du turboréacteur du carter de soufflante. Les fenêtres d'accès sont délimitées par des bords de la cloison 50 présentant un contour fermé, sensiblement circulaire (voir la figure 6C). Une fenêtre d'accès peut aussi être délimitée en partie par un élément du carter de soufflante, par exemple à une bride de fixation 53 distincte de la bride 4 ou directement au carter de soufflante 42.

Dans un mode de réalisation alternatif ou complémentaire (non illustré ici), la structure de support 50 peut aussi être discontinue autour de la paroi du turboréacteur du carter de soufflante, par exemple formée en tout ou partie par une pluralité de tiges de support ou montants de sorte à former un treilli. L'espace formé entre chacune des tiges de supports forme une fenêtre d'accès 70. Les fenêtre d'accès sont par exemple délimitées latéralement par les deux montants adjacents d'une part et radialement par la bride 44 arrière et la paroi externe 33. Dans ce cas, les tiges de support sont réparties sur toutes la circonférence de la nacelle 1 de façon relativement homogène, notamment autour de la bride 44 arrière, et sont distantes les unes des autres d'une distance prédéterminée suffisante pour garantir l'intégrité structurelle de l'entrée d'air de la nacelle 1.

Lorsque la structure de support 50 comprend une cloison, ladite cloison peut être segmentée. Elle est de préférence pleine, c'est-à-dire continue, lorsqu'elle assure une fonction porte feux.

Il est visible sur la figure 6A, que l'extrémité aval 33' de la paroi externe 33 est configurée pour supporter une extrémité avant 43' du capot 43 extérieur de soufflante dans la zone de jonction, en position assemblée, ce support pouvant être complété par des moyens de fixation pour fixer en plus le capot 43 extérieur de soufflante.

Cette paroi externe 33 vient en appui contre la surface de support 51 de la structure de support 50. Cet appui est également complété par des moyens de fixation pour fixer la structure de support 50 à ladite paroi externe 33. Par ailleurs l'extrémité aval 33' de la paroi externe 33 présente un décrochement dimensionné en fonction de l'épaisseur radiale dudit capot extérieur de soufflante 43 de sorte que les deux parois 33, 43 formant succésivement la ligne aérodynamique extérieure de la nacelle soient continues et affleurantes.

Dans une telle configuration, la jonction de l'extrémité aval 33' de la paroi externe 33 avec la structure de support 50 est située sous la zone d'appui du capot 43 extérieur de soufflante sur la paroi externe 33 de l'entrée d'air 3.

Cela permet de ne pas impacter la qualité des lignes et l'aspect cosmétique par des fixations apparentes. De ce fait, les éventuels moyens de fixation peuvent être de tailles plus importantes et moins nombreux.

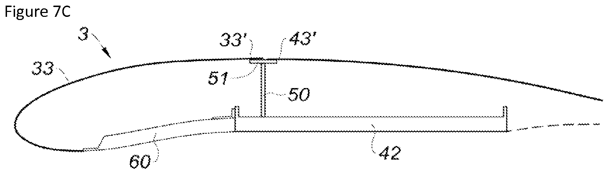

Les figures 7A, 7B et 7C illustrent des vues en d'une entrée d'air selon trois modes de réalisation présentant notamment différents modes du réalisation du support de la paroi externe 33 de l'entrée d'air et du capot extérieur de soufflante 43.

En effet, ce support peut être effectuer selon différentes configurations. Par exemple, les extémités respectives 33', 43' des parois externe 33 et du capot extérieur de soufflante 43 peuvent être aboutées et supportées directement sur la surface de support 51 de la structure de support 50 (voir figure 7C).

Dans une autre configuration, les extémités respectives 33', 43' des parois externe 33 et du capot extérieur de soufflante 43 reposent sur une pièce intermédiaire ou sont fixées grâce à cette pièce intermédiaire qui repose sur sur la surface de support 51 de la structure de support 50 (voir figure 7B).

Selon une autre configuration, la pièce intermédiaire peut être intégrée dans l'une des parois extérieure, par exemple la paroi externe 33'. Dans ce cas, comme cela est décrit en référence à la figure 6A, l'extrémité 33' de la paroi externe 33 présente un décrochement pour supporter l'extrémité 43' du capot extérieur de soufflante 43 (voir la figure 7A).

Ces configurations sont illustrées ici de façon schématique, à savoir sans moyen de fixation suppélmentaire. Bien entendu, ces jonctions peuvent être complétées par des moyens de fixation.

Par exemple, dans le cas de la figure 7A, en plus du support de l'extrémité 43'des capots de soufflante sur l'extrémité 33' de la paroi externe 33, des moyens de fixations peuvent venir fixer l'extrémité aval 33' de la paroi externe est configurée pour supporter l'extrémité avant du capot extérieur de soufflante, mais aussi être fixée avec elle par l'intermédiaire de moyens de fixations.

Dans le cas où le supportage de l'extrémité 43' des capots de soufflante est effectué directement sur la structure de support 50, cette extrémité peut être fixée en plus par des moyens de fixation pour en assurer le parfait maintien.

L'invention est décrite dans ce qui précède à titre d'exemple. Il est entendu que l'homme du métier est à même de réaliser différentes variantes de réalisation de l'invention sans pour autant sortir du cadre de l'invention, tel que revendiqué.

## Revendications

1. Entrée d'air (3) pour une nacelle (1) de moteur (6) d'aéronef, l'entrée d'air (3) comportant une lèvre (31) avant reliant une paroi interne (32) sensiblement cylindrique et une paroi externe (33) sensiblement cylindrique, une bride (34) de montage avant configurée pour coopérer avec une bride (44) arrière d'une paroi du turboréacteur, l'entrée d'air présentant une extrémité aval (33') de la paroi externe (33) configurée pour être positionnée dans une zone de jonction affleurant avec une extrémité avant (43') d'un capot extérieur (43) de soufflante (5), une partie au moins de la paroi externe (33) étant configurée pour venir au moins en appui contre une surface de support (51) d'une structure de support (50) configurée pour être solidaire de la paroi du turboréacteur formant un carter (42) de soufflante de sorte que cette solidarisation est située longitudinalement en aval de la bride (34) de montage, en position assemblée, **caractérisée en ce que** la structure de support (50) est configurée pour être solidaire de la paroi du turboréacteur formant le carter (42) de soufflante de sorte qu'un chemin de reprise des efforts, en position assemblée, passe directement de la paroi externe (33) vers le carter (42) de soufflante, en évitant la paroi interne (32).

2. Entrée d'air (3) selon la revendication 1, **caractérisée en ce que** la lèvre (31) d'entrée d'air peut être intégrée à la paroi interne (32) et/ou externe (33) de sorte à former une paroi d'un seul tenant.

3. Entrée d'air (3) selon l'une quelconque des revendications précédentes, **caractérisée en ce que** l'extrémité aval (33') de la paroi externe (33) est située longitudinalement au niveau de ou en amont de la bride (34) de montage avant.

4. Entrée d'air (3) selon l'une quelconque des revendications précédentes, **caractérisée en ce que** l'extrémité aval (33') de la paroi externe (33) est située longitudinalement en amont de la bride (34) de montage avant, à une distance (z) inférieure à 50% de la longueur (L) de l'entrée d'air (3) en amont par rapport à la bride (34) de montage, et de préférence à une distance (z) comprise entre 10% et 20% de la longueur (L) de l'entrée d'air (3) en amont par rapport à la bride (34) de montage.

5. Entrée d'air (3) selon l'une quelconque des revendications 1 à 2, **caractérisée en ce que** l'extrémité aval (33') de la paroi externe (33) est située longitudinalement en aval de la bride (34) de montage avant, et configurée de sorte à être située, en position assemblée, à une distance (d) inférieure à 50% de la longueur (L') de la paroi du turboréacteur formant le carter (42) de soufflante, en aval par rapport à la bride (34) de montage, et de préférence encore à une distance (d) inférieure de 10 à 20% de la longueur (L') de la paroi du turboréacteur formant le carter (42) de soufflante, en aval par rapport à la bride (34) de montage.

6. Entrée d'air (3) selon l'une quelconque des revendications précédentes, **caractérisée en ce que** la partie de la paroi externe (3) configurée pour venir au moins en appui contre une surface de support de la structure de support (50) comprend l'extrémité aval de la paroi externe.

7. Entrée d'air (3) selon l'une quelconque des revendications précédentes, **caractérisée en ce que**, en plus d'être en appui contre une surface de support de la structure de support (50), la paroi externe (33) est fixée à elle par des moyens de fixation.

8. Entrée d'air (3) selon l'une quelconque des revendications précédentes, **caractérisée en ce que** l'extrémité aval (33') de la paroi externe (33) est configurée pour supporter l'extrémité avant (43') du capot extérieur (43) de soufflante dans la zone de jonction, en position assemblée, ce support étant de préférence complété par des moyens de fixation pour fixer l'extrémité avant (43') du capot extérieur (43).

9. Entrée d'air (3) selon l'une quelconque des revendications précédentes, **caractérisée en ce que** ladite structure de support (50) comporte des fenêtres d'accès (70) configurées être traversées par des outils de maintenance lors des opérations de maintenance de l'entrée d'air (3).

10. Entrée d'air (3) selon la revendication 1 ou 2, **caractérisée en ce que** la structure de support (50) est disposée de manière continue autour de la paroi du turboréacteur du carter de soufflante, et comprend par exemple une cloison (54), et/ou de manière discontinue autour de la paroi du turboréacteur du carter de soufflante, et comprend par exemple un ensemble de tiges de support (52).

11. Entrée d'air (3) selon l'une quelconque des revendications précédentes, **caractérisée en ce que** l'extrémité inférieure de la structure de support (50) est configurée pour être solidaire d'une face arrière (441) de la bride (44) arrière.

12. Nacelle (1) pour moteur (6) d'aéronef **caractérisée en ce qu'**elle comporte une entrée d'air (3) selon l'une quelconque des revendications précédentes.

## Patentansprüche

1. Lufteinlass (3) für eine Gondel (1) eines Flugzeugtriebwerks (6), wobei der Lufteinlass (3) eine vordere Lippe (31), die eine im Wesentlichen zylindrische Innenwand (32) und eine im Wesentlichen zylindrische Außenwand (33) verbindet, einen vorderen Befestigungsflansch (34), der dazu konfiguriert ist, mit einem hinteren Flansch (44) einer Wand des Turbostrahltriebwerks zusammenzuwirken, wobei der Lufteinlass ein stromabwärtiges Ende (33') der Außenwand (33) aufweist, das dazu konfiguriert ist, in einer Verbindungszone, die bündig mit einem vorderen Ende (43') einer äußeren Abdeckung (43) eines Lüfters (5) abschließt, positioniert zu werden, wobei ein Teil zumindest der Außenwand (33) dazu konfiguriert ist, zur Anlage an einer Stützfläche (51) einer Stützstruktur (50) zu kommen, die dazu konfiguriert ist, an der Wand des Turbostrahltriebwerks befestigt zu werden, die ein Lüftergehäuse (42) bildet, so dass sich diese Befestigung in der zusammengebauten Position in Längsrichtung stromabwärts des Befestigungsflansches (34) befindet, **dadurch gekennzeichnet, dass** die Stützstruktur (50) dazu konfiguriert ist, mit der Wand des Turbostrahltriebwerks fest verbunden zu sein, die das Lüftergehäuse (42) bildet, so dass ein Kraftübertragungsweg in der zusammengebauten Position direkt von der Außenwand (33) zum Lüftergehäuse (42) verläuft, wobei die Innenwand (32) umgangen wird.

2. Lufteinlass (3) nach Anspruch 1, **dadurch gekennzeichnet, dass** die Lippe (31) des Lufteinlasses in die Innenwand (32) und/oder Außenwand (33) integriert werden kann, um eine einstückige Wand auszubilden.

3. Lufteinlass (3) nach einem der vorangehenden Ansprüche, **dadurch gekennzeichnet, dass** das stromabwärtige Ende (33') der Außenwand (33) in Längsrichtung an oder stromaufwärts des vorderen Befestigungsflansches (34) liegt.

4. Lufteinlass (3) nach einem der vorhergehenden Ansprüche, **dadurch gekennzeichnet, dass** das stromabwärtige Ende (33') der Außenwand (33) in Längsrichtung stromaufwärts des vorderen Befestigungsflansches (34) liegt, in einem Abstand (z) weniger als 50 % der Länge (L) des Lufteinlasses (3) stromaufwärts in Bezug auf den Befestigungsflansch (34) und vorzugsweise in einem Abstand (z) zwischen 10 % und 20 % der Länge (L) des Lufteinlasses (3) stromaufwärts in Bezug auf den Befestigungsflansch (34).

5. Lufteinlass (3) nach einem der Ansprüche 1 bis 2, **dadurch gekennzeichnet, dass** das stromabwärtige Ende (33') der Außenwand (33) in Längsrichtung stromabwärts des vorderen Befestigungsflansches (34) liegt und dazu konfiguriert ist, sich in der zusammengebauten Position in einem Abstand (d) von weniger als 50 % der Länge (L') der Wand des Turbostrahltriebwerks, die das Lüftergehäuse (42) bildet, stromabwärts in Bezug auf den Befestigungsflansch (34) und vorzugsweise in einem Abstand (d) von weniger als 10 bis 20 % der Länge (L') der Wand des Turbostrahltriebwerks, die das Lüftergehäuse (42) bildet, stromabwärts in Bezug auf den Befestigungsflansch (34) zu befinden.

6. Lufteinlass (3) nach einem der vorhergehenden Ansprüche, **dadurch gekennzeichnet, dass** der Teil der Außenwand (3), der dazu konfiguriert ist, zur Anlage zumindest an einer Stützfläche der Stützstruktur (50) zu kommen, das stromabwärtige Ende der Außenwand umfasst.

7. Lufteinlass (3) nach einem der vorhergehenden Ansprüche, **dadurch gekennzeichnet, dass** die Außenwand (33) außer, dass sie in Anlage an einer Stützfläche der Stützstruktur (50) ist, ebenfalls an dieser durch Fixierungsmittel fixiert ist.

8. Lufteinlass (3) nach einem der vorhergehenden Ansprüche, **dadurch gekennzeichnet, dass** das stromabwärtige Ende (33') der Außenwand (33) dazu konfiguriert ist, das vordere Ende (43') der äußeren Abdeckung (43) des Lüfters in der zusammengebauten Position in der Verbindungszone zu stützen, wobei dieses Stützen vorzugsweise durch Fixierungsmittel zum Fixieren des vorderen Endes (43') der äußeren Abdeckung (43) vervollständigt wird.

9. Lufteinlass (3) nach einem der vorhergehenden Ansprüche, **dadurch gekennzeichnet, dass** die Stützstruktur (50) Zugangsfenster (70) umfasst, die dazu konfiguriert sind, während Wartungsarbeiten am Lufteinlass (3) von Wartungswerkzeugen durchquert zu werden.

10. Lufteinlass (3) nach Anspruch 1 oder 2, **dadurch gekennzeichnet, dass** die Stützstruktur (50) durchgehend um die Wand des Turbostrahltriebwerks des Lüftergehäuses angeordnet ist und beispielsweise eine Trennwand (54) umfasst und/oder diskontinuierlich um die Wand des Turbostrahltriebwerks des Lüftergehäuses angeordnet ist und beispielsweise einen Satz Stützstangen (52) umfasst.

11. Lufteinlass (3) nach einem der vorhergehenden Ansprüche, **dadurch gekennzeichnet, dass** das untere Ende der Stützstruktur (50) dazu konfiguriert ist, mit einer Rückseite (441) des hinteren Flansches (44) fest verbunden zu sein.

12. Gondel (1) für ein Flugzeugtriebwerk (6), **dadurch gekennzeichnet, dass** sie einen Lufteinlass (3) nach einem der vorhergehenden Ansprüche umfasst.

## Claims

1. An air intake (3) for an aircraft engine (6) nacelle (1), the air intake (3) including a front lip (31) connecting a substantially cylindrical inner wall (32) and a substantially cylindrical outer wall (33), a front mounting flange (34) configured to cooperate with a rear flange (44) of a wall of the turbojet engine, the air intake having a downstream end (33') of the outer wall (33) configured to be positioned in a junction area flush with a front end (43') of a fan (5) external cowl (43), a portion at least of the outer wall (33) being configured to bear at least against a support surface (51) of a support structure (50) configured to be secured to the wall of the turbojet engine forming a fan casing (42) so that this securing is located longitudinally downstream of the mounting flange (34), in the assembled position, **characterized in that** the support structure (50) is configured to be secured to the wall of the turbojet engine forming the fan casing (42) so that a force take-up path, in the assembled position, passes directly from the outer wall (33) towards the fan casing (42), while avoiding the inner wall (32).

2. The air intake (3) according to claim 1, **characterized in that** the air intake lip (31) can be integrated to the inner (32) and/or outer (33) wall so as to form a wall in one-piece.

3. The air intake (3) according to any one of the preceding claims, **characterized in that** the downstream end (33') of the outer wall (33) is located longitudinally at or upstream of the front mounting flange (34).

4. The air intake (3) according to any one of the preceding claims, **characterized in that** the downstream end (33') of the outer wall (33) is located longitudinally upstream of the front mounting flange (34), at a distance (z) less than 50% of the length (L) of the air intake (3) upstream relative to the mounting flange (34), and preferably at a distance (z) comprised between 10% and 20% of the length (L) of the air intake (3) upstream relative to the mounting flange (34).

5. The air intake (3) according to any one of claims 1 to 2, **characterized in that** the downstream end (33') of the outer wall (33) is located longitudinally downstream of the front mounting flange (34), and configured so as to be located, in the assembled position, at a distance (d) less than 50% of the length (L') of the wall of the turbojet engine forming the fan casing (42), downstream relative to the mounting flange (34), and more preferably at a distance (d) less than 10 to 20% of the length (L') of the wall of the turbojet engine forming the fan casing (42), downstream relative to the mounting flange (34).

6. The air intake (3) according to any one of the preceding claims, **characterized in that** the portion of the outer wall (3) configured to bear at least against a support surface of the support structure (50) comprises the downstream end of the outer wall.

7. The air intake (3) according to any one of the preceding claims, **characterized in that**, besides bearing against a support surface of the support structure (50), the outer wall (33) is fastened thereto by fastening means.

8. The air intake (3) according to any one of the preceding claims, **characterized in that** the downstream end (33') of the outer wall (33) is configured to support the front end (43') of the fan external cowl (43) in the junction area, in the assembled position, this support being preferably completed with fastening means for fastening the front end (43') of the external cowl (43).

9. The air intake (3) according to any one of the preceding claims, **characterized in that** said support structure (50) includes access apertures (70) configured to be crossed by maintenance tools during operations of maintenance of the air intake (3).

10. The air intake (3) according to claim 1 or 2, **characterized in that** the support structure (50) is disposed continuously around the wall of the turbojet engine of the fan casing, and comprises for example a partition (54), and/or discontinuously around the wall of the turbojet engine of the fan casing, and comprises for example a set of support rods (52).

11. The air intake (3) according to any one of the preceding claims, **characterized in that** the lower end of the support structure (50) is configured to be secured to a rear face (441) of the rear flange (44).

12. A nacelle (1) for an aircraft engine (6) **characterized in that** it includes an air intake (3) according to any one of the preceding claims.
